# EUROPEAN PATENT SPECIFICATION

(11) **EP 0 432 970 B1**
(45) Date of publication and mention of the grant of the patent: **16.04.1997**
(21) Application number: 90313289.2
(22) Date of filing: 07.12.1990
(51) Int. Cl.: G02C 13/00

(54) **Apparatus and method for cleaning contact lenses**
Gerät und Verfahren zum Reinigen von Kontaktlinsen
Appareil et méthode pour nettoyer des lentilles de contact

(30) Priority: 11.12.1989 US 448753
(43) Date of publication of application: 19.06.1991
(73) Proprietor: Pankow, Mark Lee, Chicago, Illinois 60614 (US)
(72) Inventor: Pankow, Mark Lee, Chicago, Illinois 60614 (US)
(74) Representative: Ranson, Arthur Terence

(56) References cited:
- EP-A- 0 268 087
- US-A- 3 871 395
- US-A- 4 187 574
- US-A- 4 559 662
- US-A- 4 732 185
- US-A- 4 852 592
- US-A- 4 872 965

## Description

The present invention generally relates to an apparatus and methods for cleaning contact lenses. More particularly, the invention relates to an apparatus and method by which contact lenses, and specifically those which are water and/or gas permeable, are cleaned by the efficient application of an electrical field focused through the lens. Under the influence of the electrical field, contaminants migrate quickly from above and below the surface of the lens.

Contact lenses are thin films having a major convex surface and a major concave surface for placement directly onto a wearer's eyes generally to correct defects in vision. Contact lenses may be made from a variety of materials. One widely used type of material from which contact lens may be made is a gas permeable plastic. Another type of material comprises a hydrophilic gel. Both of these types of lenses are, on a molecular level, characteristically water-filled porous lattices that are water and/or ion permeable. Reference will be made herein and in the claiming clauses hereof to these types of lenses as permeable.

While the hydrated porosity of a permeable lens is advantageous in that it generally allows this type of lens to rest on the wearer's cornea without producing irritation, it is disadvantageous from the maintenance perspective. The water-filled porous structure of a permeable lens allows contaminants to become absorbed upon, or trapped below, the surface of the lens.

Lens contaminants come from a variety of sources. The wearer's tears are generally the most significant single source of lens contamination. Many different types of inorganic and organic molecules and organisms become selectively absorbed onto a lens from the fluid which constantly bathes the lens. Another source is the atmosphere - a variety of inorganic and organic substances and organisms may be absorbed directly from the atmosphere onto or within the lens. The simple handling of the lens, such as when the lens is being placed on or taken off of the cornea, may cause a variety of contaminants, including oil, dirt, and bacteria or other organisms, to be transferred to the lens.

Contaminants diminish the optical performance of a lens. After a lens has been worn for a period of time, deposits become evident on or within the lens' clear structure. The deposits may appear as a white, partially, opaque occlusion or as a semi-transparent, possibly coloured layer. Further problematic is that lens contaminants act as a substrate to facilitate the deposit of other inorganic or organic substances onto or within the lens. Visual acuity decreases with an increase in the lens opacity caused by the deposits.

Besides affecting the optical performance of a lens, lens contaminants can also affect the physiology of the eye. The contaminants act as a source of irritation. Further important to the wearer's health is that lens contaminants provide a suitable environment within which deleterious organisms such as bacteria, fungi, and yeast may flourish. Conjunctivitis or giant papillary conjunctivitis may result from the contamination of a lens.

To lengthen the useful life of their contact lenses and to avoid the physiological problems associated with contaminated lenses, wearers are instructed to follow a periodic cleaning and sterilizing regime. Because such procedures often include time consuming steps involving the use of often costly chemicals or equipment, wearers are generally lax in following the prescribed procedures and often make only a perfunctory and less than regular attempt at removing contaminants from the surface of their lenses.

Of the known apparatus and methods with which wearers may attempt to clean and/or sterilize their lenses, many include physical-based apparatus and methods, such as those that require scrubbing, agitation, and/or swirling. Other apparatus and methods are chemical-based and may employ surfactants, oxidizing agents, and/or enzymes. However, such conventional cleaning apparatus and methods are generally limited in their ability to clean a permeable lens completely and/or without harm to the lens.

To illustrate, known apparatus and techniques, such as those that clean by scrubbing or that rely on the use of strong chemicals, damage the fragile lattice structure from which permeable lenses are made. Other conventional apparatus and methods, while they may not damage a lens during cleaning, are unable to remove all of the contaminants lodged on the surface and may be wholly unable to remove contaminants situated farther below the surface of the lens. Even after a lens has been superficially cleaned, many conventional apparatus and methods leave a residue consisting of dislodged contaminants, chemicals, or a combination of both on, or below the surface of the lens. This residue may irritate or damage the cornea of the wearer. Also many conventional apparatus and methods require extended handling of the lens. Handling allows dirt and/or oil to be transferred to the lens and may cause damage to the fragile, soft structure of the lens.

There is also known from US-A- 4 732 185 a technique for cleaning a contact lens by making use of electrokinetic phenomenon. In this technique a contact lens is arranged to be disposed between two electrodes connected to a source of direct current, the lens and electrodes being immersed in a liquid buffer solution whereby an electric field is established across the lens. Contaminants on the lens become charged and are attracted to a respective electrode. Thereby to clean and sterilize the lens.

Another type of cleaning apparatus making use of the electrokinetic phenomenon is known from US-A-4 872 965.

According to a first aspect of the present invention, there is provided an apparatus for cleaning a contact lens wherein the apparatus includes a receptacle within which the lens is arranged between two electrodes connectable to a source of direct current and with a current transmission medium coupling the electrodes to the lens so that an electric field is established through the lens for cleaning the lens electrokinetically, said apparatus being characterised in that said current transmission medium is constituted by at least one transmission media member composed of pliant fluid absorbent material and included within said receptacle, said transmission media member including a lens contacting surface for contacting one major surface of the contact lens, and said contacting surface being dimensioned and disposed such that when wetted with an electrically conductive fluid it cooperates with electrodes to establish said electric field through the lens when it is aligned in contact with said transmission media member, such that substantially all transmission of electric current between said electrodes is confined to take place through the lens.

In one embodiment, said apparatus comprises a pair of said transmission media members each comprising pliant fluid absorbent material and including a respective said lens contacting surface, the lens contacting surface of one of said transmission media members being adapted for contacting one major surface of the lens, and the lens contacting surface of the other of said transmission media members being adapted for contacting the other major surface of said lens; and said transmission media members when wetted with said electrically conductive fluid cooperating with the electrodes to establish said electric field through the lens when it is aligned between and contacted by said wetted transmission media members.

In another embodiment, said apparatus comprises a pair of said transmission media members disposed between said electrodes and spaced apart to receive the lens therebetween, each of said transmission media members including a respective said lens contacting surface for contacting a respective one of the major surfaces of the lens each of said transmission media members being formed of a pliant fluid absorbent material such that, when they are wetted with said electrically conductive fluid, said media members are capable of conveying an electrical current, and said transmission media members and said electrodes cooperating when a permeable lens is positioned between and in contact with said transmission media members and the latter are wetted with said electrically conductive fluid, such that said electric field is established through said permeable lens whereby contaminants on and within said lens are pulled from said lens and deposited onto said transmission media members under the influence of said current.

In accordance with a second aspect of the present invention, there is also provided a method for cleaning and disinfecting a contaminated permeable lens having opposing surfaces, including the steps of positioning the lens in a receptacle by bringing separate transmission media members formed of a pliant fluid absorbent material into contact with individual opposing electrodes and by aligning the permeable leans between respective contacting surfaces of the transmission media members; wetting said transmission media members with an electrically conductive solution; and establishing an electric current between said electrodes, through said wetted transmission media members and said lens aligned on said lens contacting surfaces of said transmission media members, said lens contacting surfaces being dimensioned and disposed such that substantially all transmissions of electric current between said electrodes is confined to take place through the lens whereby contaminants of said lens migrate under the influence of an electric field in the lens from within the body, or off the surface, of said lens and onto said transmission media members.

In one preferred embodiment of the present invention, members made from the transmission media directly cover, without overlap, the major convex surface and the major concave surface of a lens so that the lens is aligned without distortion between the terminals. In a second preferred embodiment, the apparatus includes a member made from the transmission media that generally covers the major convex surface of the lens and a second member made from the transmission media that extends from one terminal into a layer of fluid covering the major concave surface of the lens. In a third embodiment, the apparatus includes one member made from the transmission media that generally covers the major convex surface of the lens to hold it in supportive alignment between the terminals, one terminal of which extends into fluid covering the major surface of the lens. Depending on the embodiment, the terminals may directly contact the transmission media members, the members being positioned to separately cover the major surfaces of the lens. Alternatively, one of the terminals may make indirect contact with one of the members covering one of the lens' surface through a body of fluid. Additionally, one of the members may extend from direct contact with one of the terminals to a layer of fluid covering the concave surface of the lens. A different charge formed in each terminal is transmitted from each terminal; through a media member with which the terminal is in direct contact and to the lens; through a media member to a layer of fluid covering the lens concave surface and to the lens; or through a body of fluid to one of the media members in contact with the fluid and to the lens.

Because the media members, or, in other preferred embodiments, the fluid layer and the single media member, do not touch each other, the electrical current cannot "leak" around the lens and must flow through the lens. By focusing the electrical current through the lens, the present invention overcomes the disadvantages of conventional apparatus, such as that disclosed in aforementioned U.S. -A- 4 732 185, in which the lens is simply immersed in a body of fluid thereby allowing the current to flow - according to the path of least resistance - around the lens. At best, a partially clean lens results from the use of such conventional apparatus. With the present invention, the focused electrical current causes contaminants, such as inorganic and organic substances and organisms, to quickly migrate from below of, and off the surfaces of the lens. The contaminants pulled from the leens may be captured by a transmission media member. Any contaminants which remain loosely on the surfaces of the lens may be washed off. As the media member may be made from disposable material, the health risks associated with the cleaning of contaminated contact lens are lessened. It is through the use of the present invention that a permeable lens is cleaned and sterilized.

It is, accordingly, a general object of the present invention to provide an apparatus and methods by which lenses may be cleaned and sterilized.

Another object of the present invention is to provide an apparatus and methods by which permeable lenses may be cleaned and sterilized through the application of an electrical field.

An additional object of the present invention is to provide an apparatus and methods which utilize separate terminals to establish an electric current through a permeable lens aligned therebetween, thereby cleaning the lens.

A further object of the present invention is to provide an apparatus and methods that facilitate the efficient use of an electric current to clean a permeable lens by allowing the electrical current to pass only through the lens to draw contaminants off and from within the body of the lens.

The invention will now be further described by way of examples, with reference to the accompanying drawings, in which:-
Fig.1 is a front perspective view of one embodiment of the present invention in which two receptacles are fitted in appropriately sized openings of a housing;
Fig.2 is a rear perspective view of the embodiment illustrated in Fig.1 and opened to show the circuitry;
Fig.3 is an exploded cross-sectional view of one preferred embodiment of the present invention, in which a lens is aligned by separate transmission media members between terminals, each of the terminals being in direct contact with a separate media member;
Fig.4 is a similar exploded cross-sectional view of an alternative embodiment of the present invention, in which one terminal indirectly contacts one of the transmission media members through a compartment generally containing conventional fluid;
Fig.4a is a top plan view of one means to prevent leakage of an electric current around a lens;
Fig.5 is a combined exploded and assembled cross-sectional view of an alternative embodiment of the present invention, in which the convex surface of the lens is generally covered by, and held in supportive alignment between, the terminals by a transmission media member; and
Fig.6 is a similar cross-sectional view to Fig.5 of another alternative embodiment of the present invention, in which one of the transmission media members, in direct contact with one of the terminals, extends upward to support a lens having a layer of fluid covering the concave surface of the lens.

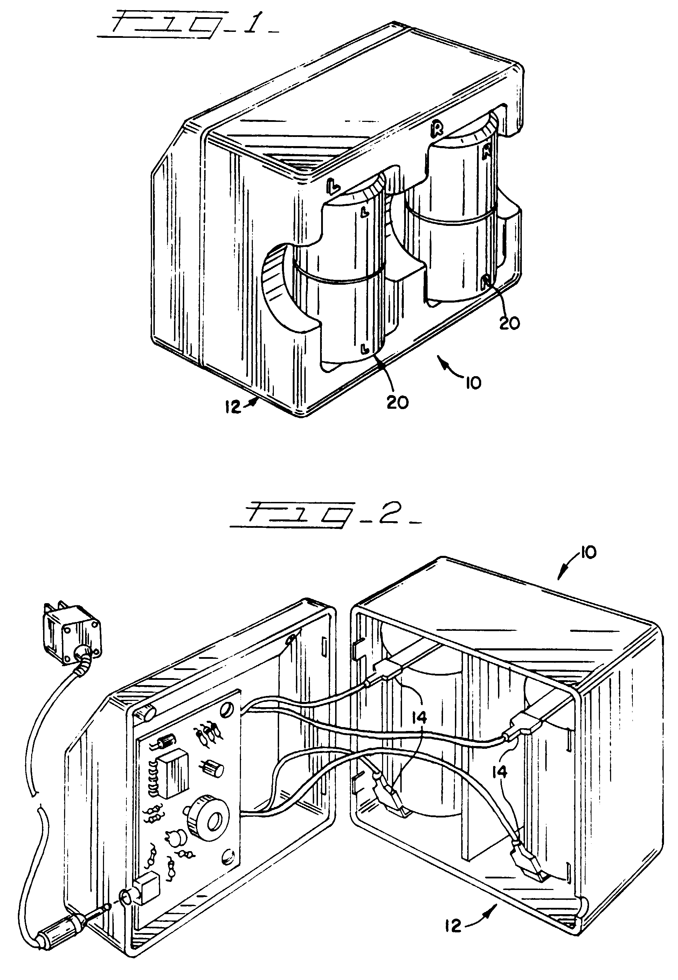

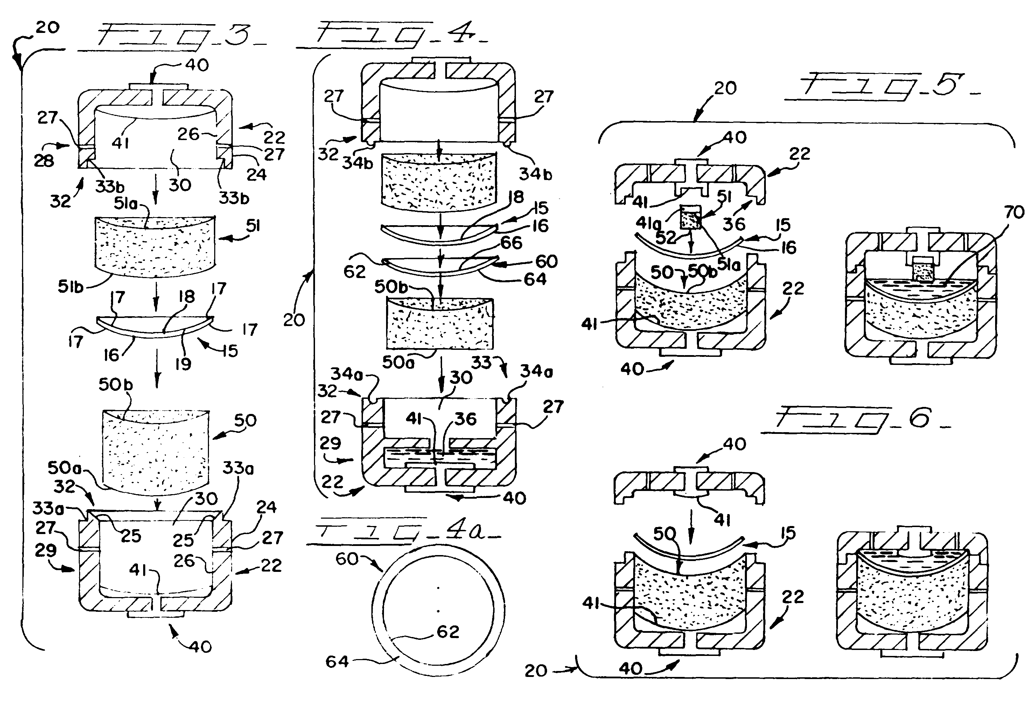

A cleaning apparatus according to the present invention is generally illustrated and designated by reference number 10. Cleaning apparatus 10 may include a housing 12 having the circuitry 14 and sized to accommodate one or more receptacles 20. In Figure 1, a housing 12 - that is suitable to hold two receptacles 20 and by which a pair of lenses may be cleaned simultaneously - is illustrated. In Fig.2, the housing 12 illustrated in Fig.1 is opened to partially show the circuitry 14.

As shown in cross-section in Figs. 3 to 6, each receptacle 20 includes a wall 22, having an outer face 24 and an inner face 26, and which may be made from a non-conducting material, such as synthetic resinous material, commonly referred to as plastic. To reduce the possible porosity of, and/or to increase the hydrophobic character of the material, a coating, such as one including silicone, may be applied to the inner face 26 of wall 22. Vents 27 may open through the wall 22 suitable for the discharge of, for example, gas.

Wall 22 separates into generally opposing receptacle segments 28 and 29 and to provide an opening 30. Opening 30 is sized to accept within it a lens 15, faces 41 of terminals 40, and, depending on the embodiment of the present invention, at least one transmission media member 50. The segments 28 and 29 may be joined by closure means 32,33 which provide a stable, safe, and water-tight seal, such as those means that include the simple mating edges 33a, 33b illustrated in Fig.3 or the snap-fit arrangement 34a,34b illustrated in Fig.4.

Terminals 40 open through the wall 22 into the opening 30 in positions so that a lens 15 may be juxtaposed therebetween. So that each terminal 40 may function as an electrode and communicate opposite electrical charges produced by the circuitry 14 included within the housing 12 of apparatus 10, terminals 40 are composed of a substance that is wholly or partially composed of metal. Each terminal 40 includes a face 41 by which each terminal 40 may communicate an electrical charge directly to a transmission media member or indirectly to the member through a body of fluid.

A lens 15 is supportively positioned between the terminals 40 by at least one member 50,51 made from transmission media. The transmission media is composed of a substance that is not inimical to the surface of, or the composition of, a permeable lens 15 particularly when electrical charges are transmitted by, and an electrical current is established through, members 50 and/or 51 made from the media. The media must be capable of being wetted. Furthermore, the media must be sufficiently pliable and suitable for shaping and/or sizing in order that a permeable lens 15 may be covered by a member made from the media without causing damage or distortion to the surface of or body of the lens. Acceptable substances from which the transmission media may be made include pliant substances such as a foraminous material, for example, an open cell plastics foam, or paper, for example, high quality, ashless filter grade paper. Transmission media may be made also from a composite of materials, such as paper-sided plastics foam.

Disposed within the opening 30 is, depending on the embodiment, at least one member 50 made from the transmission media. In those preferred embodiments illustrated in Figs. 3 to 5, two members 50,51 made from the transmission media are disposed within the opening 30. The members 50,51 include terminal contacting surfaces 50a,51a through which the terminals 40 may make direct or indirect contact with the transmission media members 50,51. In the embodiments of the present invention illustrated in Fig. 3, the terminals 40 may make direct contact with the transmission media member 50,51. To facilitate the uniform communication of the electrical charge from each terminal 40 to each media member 50,51, the terminal faces 41 and the contacting surfaces 50a,51a of the members 50,51 may be appropriately shaped. For example, in those embodiments in which the one of the members 50 supportively engages the lens 15 from the lens convex surface 16, the terminal 40 that is in contact with the member 50 may have a face 41 which is generally concave, as in Figs. 3, 5 and 6. Alternatively, in embodiments of the present invention, such as illustrated in Fig.4 in which one of the terminals 40 makes indirect contact with the transmission media member 50 through fluid, the terminal contacting surface 50a of the member 50 may be generally flat and the terminal 40 may have a face 41 which is generally flat. Fluid 36 (to a level somewhat higher than that shown in Fig.4) may be held within a compartment formed within the opening 30 of the receptacle 20. In other embodiments such as illustrated in Fig.5, the direct contact between the terminal 40 and the media member 51 may be facilitated by the inclusion of a terminal transmission interface 41a between the contacting face 5la of the media member 51 and the terminal face 41. The interface 41a may be shaped and made from a material, such as that from which the terminals 40 may be made, to facilitate the transmission of an electrical charge from a terminal 40 to the media member 51.

Each transmission media member 50 and/or 51 which covers one dominant surface 16 and/or 18 of a lens 15 correspondingly includes further a lens contacting surface 50b and/or 51b. The lens contacting surfaces 50b,51b of the transmission media 50 and/or 51 may be sized and shaped to cover individually and without damage to or distortion of the major surfaces 16,18 of, and body 19 of the lens 15. For example, in the embodiment of the receptacle 20 illustrated in Figs. 3 and 4 in which separate transmission media members 50 and 51 are disposed within the receptacle 20, the lens contacting 50b of transmission media 50 is shown as sized and shaped to cover the major convex surface 16 of the lens 15 and without overlap beyond this surface. In the same Fig.3 embodiment, the lens contacting surface 51b of transmission media 51 is shown also as sized and shaped to cover the major concave surface 18 of the lens 15, and without overlap beyond this surface. In the embodiments of the receptacle illustrated in Figs. 5 and 6, one transmission media member 50 is disposed within the receptacle 20 so that the lens contacting surface 50b of the member 50 covers and supportively engages the convex surface 16 of the lens 15.

Alternatively, as illustrated in Fig.5, the member 51 may include a transmission face 52 by which an electrical charge may be communicated from the terminal 40 to the media member 51 and to a layer of fluid 70 which covers the concave surface 18 of the lens 15.

A lens 15 may be decontaminated and sterilized by the present invention according to-the following methods. In that embodiment of the present invention, such as the one illustrated in Fig.4, in which the receptacle 20 includes compartment 36, compartment 36 is filled with a fluid, such as conventional saline or ionic disinfecting solution. While each receptacle 20 may be made with a media member or media members fixed in place, in those embodiments having a transmission media member 50 or transmission media members 50,51 that are insertable, the media members 50 and/or 51 are fitted within the opening 30. The media members 50 and/or 51 are thoroughly wetted, such as with the known solution.

The lens 15 is aligned preferably to maximize the surface area of the lens exposed to the direct flow of the electrical current established between the charged terminals 40. In the embodiments of the present invention illustrated in Figs. 5 and 6, the convex surface 16 of the lens is supportively covered by the lens contacting surface 50b of the media member 50. In these same embodiments, the concave surface 18 of the lens 15 is covered by a layer 70 of fluid into which the member 51 extends from the terminal 40. In the embodiments of the present invention illustrated in Figs. 3 and 4, lens 15 is placed onto each and between the transmission media 50,51 so that, for example, the convex surface 16 of the lens 15 is generally covered by the lens contacting surface 50b of member 50 and the concave surface 18 of the lens 15 is generally covered by the lens contacting surface 51b of member 51. Beyond the surfaces 16,18 of the lens 15 as covered, the media 50,51 do not overlap to touch each other.

The receptacle 20 is joined and closed. The receptacle 20 may be included within a housing 12 having circuitry 14 suitable to facilitate the cleaning of a single lens 15 within a single receptacle 20. Alternatively, the receptacle may be insertable into a housing 12, as illustrated in Fig.1, and may be held in place by known means, such as through spring loaded contact points, not shown. Power may be applied through a normal electrical lead and connected to a conventional source of current supply, as illustrated in Fig.1, or a separate electric source such as conventional batteries or known rechargeable batteries, not shown. For reasons of safety, the circuitry 14 may include known means to provide a low voltage charge.

Because in those embodiments with media members 50,51, the members 50,51 do not touch each other and, in those embodiments with member 50 and a layer of fluid 70, the member 50 and fluid layer 70 do not touch each other, the electrical charges transmitted by the terminals 40 to the members 50 and/or 51 and/or to the fluid layer 70 establishes an electrical current that is focused to flow through the lens 15 and does not "leak" around the lens 15. To ensure that the current flows only through the lens 15, the apparatus 10 may include means to further focus the current. Such means may include edging of the inner face 26 of the wall 22, such as those edges 25 illustrated in Fig.3, which may be shaped to engage an edge portion 17 of one of surfaces 16,18 of the lens 15 thereby generally sealing and separating each media member 50,51 from each other. Alternative means may include, as in the embodiment illustrated in Figs. 4 and 4a, a ring 60, composed of a material through which an electrical current cannot be transmitted. Ring 60 may be juxtaposed in the receptacle 20 and between the lens 15 and one or both of the transmission media members 50 and/or 51. Ring 60 may be formed from a continuous segment 62 which is dimensioned and opened in order to cover the edge portion 17 of one or both of the lens surfaces 16 and/or 18 thereby separating the members 50,51 from each other or the member 50 and the fluid layer 36 from each other to aid in the prevention of leakage of the electrical current around the lens 15. Ring 60 may be shaped to include surfaces 64,66 that are correspondingly opposite to the surface 16 and/or 18 of the lens to prevent distortion to the lens 15.

The apparatus 10 cleans permeable lenses through the unique application of electrokinetic phenomenon. Soft contact lenses are made largely from hydrophilic molecules which absorb large proportions of water to form a gel, the gel being basically a molecular lattice existing within an aqueous environment. Most substances acquire a surface electric charge when brought into contact with an aqueous medium. The contaminants of a soft contact lens are no different. They are electrically charged largely as a result of their contact with the aqueous medium of the lens. It is known that a charged material, which is in contact with a liquid, will migrate relative to the stationary liquid under the influence of an applied electric field. The contaminants absorbed on or trapped within the body of permeable lenses will migrate off and from within the lens when an electric field is applied to the lens. The present invention relies on this electrokinetic phenomenon to remove contaminants from a permeable lens.

As the apparatus 10 may include a housing 12 with circuitry 14 to provide the necessary separate charges to and accommodate one or more receptacles 20, through the operation of the apparatus 10 one or more lenses 15 may be cleaned in an amount of time which will vary with the extent to which each lens 15 is contaminated and the thickness of each lens 15. Since the current flow through the lens 15 to be cleaned, as measured in milliamps level, increases as the lens 15 becomes cleaner, and therefore electrical resistance decreases, the apparatus 10 may be fitted with separate means to stop the power flow to and therefore the cleaning process taking place in each receptacle 20 once a certain amperage level is attained. Alternatively, the apparatus 10 may include means to stop the power flow after the apparatus 10 has been allowed to run a certain period of time and as measured by a separate timing mechanism (not shown). Further alternatively, the apparatus 10 may include known means to stop the flow of power to the apparatus 10 at any point desired by the operator. Notation may be provided on the housing 12 of the apparatus 10, such as illustrated in Fig.1, to identify that receptacle which holds the left lens and that receptacle which holds the right lens being cleaned. Notation such as this may be useful particularly when the individual lenses 15 vary in shape such as when one lens 15 is suitable to correct for astigmatism.

When in operation, deposits (not shown) or contaminants (not shown) will migrate from above and/or below the surface of the lens 15 to the faces 16,18 of the lens 15 or onto the transmission media members 50 and/or 51. The deposits or contaminants may be removed from the lens 15 such as by washing with a fluid that may include a surfactant. Those deposits or contaminants that migrate onto the transmission media members 50 and/or 51 may be washed from them. The transmission media members 50 and/or 51 may also be composed of a material that generally allows the member or members to be simply discarded upon completion of the cleaning of the lens.

## Claims

1. An apparatus (10) for cleaning a contact lens (15) wherein the apparatus includes a receptacle within which the lens is arranged between two electrodes (40) connectible to a source of direct current and with a current transmission medium coupling the electrodes (40) to the lens so that an electric field is established through the lens for cleaning the lens electrokinetically, said apparatus being characterised in that said current transmission medium is constituted by at least one transmission media member (50) composed of pliant fluid absorbent material and included within said receptacle, said transmission media member (50) including a lens contacting surface (50b) for contacting one major surface (16) of the contact lens (15), and said contacting surface being dimensioned and disposed such that when wetted with an electrically conductive fluid (36) it cooperates with electrodes (40) to establish said electric field through the lens (15) when it is aligned in contact with said transmission media member (50), such that substantially all transmission of electric current between said electrodes is confined to take place through the lens.

2. An apparatus as claimed in claim 1, which comprises a pair of said transmission media members (50,51) each comprising pliant fluid absorbent material and including a respective said lens contacting surface (50b,51b), the lens contacting surface (50b) of one (50) of said transmission media members being adapted for contacting one major surface (16) of the lens (15), and the lens contacting surface (51b) of the other (51) of said transmission media members being adapted for contacting the other major surface (18) of said lens (15), and said transmission media members (50,51) when wetted with said electrically conductive fluid (36) cooperating with the electrodes (40) to establish said electric field through the lens (15) when it is aligned between and contacted by said wetted transmission media members (50,51).

3. An apparatus as claimed in claim 1, comprising a pair of said transmission media members (50,51) disposed between said electrodes (40) and spaced apart to receive the lens (15) therebetween, each of said transmission media members (50,51) including a respective said lens contacting surface (50b,51b) for contacting a respective one of the major surfaces (16,18) of the lens (15), each of said transmission media members (50,51) being formed of a pliant fluid absorbent material such that, when they are wetted with said electrically conductive fluid, said media members (50,51) are capable of conveying an electrical current; and said transmission media members (50,51) and said electrodes (40) cooperating when a permeable lens (15) is positioned between and in contact with said transmission media members (50,51) and the latter are wetted with said electrically conductive fluid, such that said electric field is established through said permeable lens (15) whereby contaminants on and within said lens are pulled from said lens and deposited onto said transmission media members (50,51) under the influence of said current.

4. A method for cleaning and disinfecting a contaminated permeable lens (15) having opposing major surfaces (16,18), including the steps of positioning the lens in a receptacle by bringing separate transmission media members (50,51) formed of a pliant fluid absorbent material into contact with individual opposing electrodes (40) and by aligning the permeable lens (15) between respective contacting surfaces of the transmission media members (50,51); wetting said transmission media members (50,51) with an electrically conductive solution; and establishing an electric current between said electrodes (40), through said wetted transmission media members (50,51) and said lens (15) aligned on said lens contacting surfaces (50b,51b) of said transmission media members, said lens contacting surfaces (50b,51b) being dimensioned and disposed such that substantially all transmission of electric current between said electrodes is confined to take place through the lens whereby contaminants of said lens (15) migrate under the influence of an electric field in the lens from within the body, or off the surface, of said lens (15) and onto said transmission media members (50,51).

## Patentansprüche

1. Vorrichtung (10) zum Reinigen einer Kontaktlinse (15), wobei die Vorrichtung folgendes umfaßt:: eine Aufnahme, in der die Linse zwischen zwei Elektroden (40) angeordnet wird, die an eine Gleichstromquelle angeschlossen werden können, und mit einem Stromübertragungsmedium, das die Elektroden (40) mit der Linse koppelt, so daß ein elektrisches Feld durch die Linse erzeugt wird, um die Linse elektrokinetisch zu reinigen, wobei die genannte Vorrichtung dadurch gekennzeichnet ist, daß das genannte Stromübertragungsmedium durch wenigstens ein in der genannten Aufnahme befindliches, aus einem biegsamen, fluidabsorptionsfähigen Material bestehendes Übertragungsmedium-Element (50) gebildet wird, wobei das genannte Übertragungsmedium-Element (50) eine Linsenkontaktierungsfläche (50b) zum Kontaktieren einer großen Fläche (16) der Kontaktlinse (15) aufweist, und wobei die genannte Kontaktierungsfläche so dimensioniert und angeordnet ist, daß sie, wenn sie mit einem elektrisch leitenden Fluid (36) benetzt ist, mit Elektroden (40) zusammenwirkt, um das genannte elektrische Feld durch die Linse (15) zu erzeugen, wenn sie sich mit dem genannten Übertragungsmedium-Element (50) in Kontakt befindet, so daß im wesentlichen die gesamte Übertragung von elektrischem Strom zwischen den genannten Elektroden durch die Linse stattfindet.

2. Vorrichtung nach Anspruch 1, umfassend ein Paar der genannten Übertragungsmedium-Elemente (50, 51), die jeweils biegsames, fluidabsorptionsfähiges Material umfassen und eine jeweilige genannte Linsenkontaktierungsfläche (50b, 51b) aufweisen, wobei die Linsenkontaktierungsfläche (50b) von einem (50) der genannten Übertragungsmedium-Elemente eine große Fläche (16) der Linse (15) kontaktiert und die Linsenkontaktierungsfläche (51b) des anderen (51) der genannten Übertragungsmittelelemente die andere große Fläche (18) der genannten Linse (15) kontaktiert, und wobei die genannten Übertragungsmedium-Elemente (50, 51), wenn sie mit dem genannten elektrisch leitenden Fluid (36) benetzt sind, mit den Elektroden (40) zusammenwirken, um das genannte elektrische Feld durch die Linse (15) zu erzeugen, wenn diese zwischen den genannten benetzten Übertragungsmedium-Elementen (50, 51) ausgerichtet und mit diesen in Kontakt ist.

3. Vorrichtung nach Anspruch 1, umfassend ein Paar der genannten Übertragungsmedium-Elemente (50, 51), die zwischen den genannten Elektroden (40) angeordnet und voneinander beabstandet sind, um die Linse (15) zwischen sich aufzunehmen, wobei jedes der genannten Übertragungsmedium-Elemente (50, 51) eine entsprechende genannte Linsenkontaktierungsfläche (50b, 51b) zum Kontaktieren jeweils einer der großen Flächen (16, 18) der Linse (15) aufweist, wobei jedes der genannten Übertragungsmedium-Elemente (50, 51) aus einem biegsamen, fluidabsorptionsfähigen Material gebildet ist, so daß, wenn sie mit dem genannten elektrisch leitenden Fluid benetzt sind, die genannten Mediumelemente (50, 51) einen elektrischen Strom übertragen können; und wobei die genannten Übertragungsmedium-Elemente (50, 51) und die genannten Elektroden (40) zusammenwirken, wenn eine durchlässige Linse (15) zwischen und in Kontakt mit den genannten Übertragungsmedium-Elementen (50, 51) positioniert ist und die Letzteren mit dem genannten elektrisch leitenden Fluid benetzt sind, so daß das genannte elektrische Feld durch die genannte durchlässige Linse (15) erzeugt wird, so daß Schmutzstoffe auf und in der genannten Linse aus der genannten Linse gezogen und unter dem Einfluß des genannten Stroms auf die genannten Übertragungsmedium-Elemente (50, 51) abgelagert werden.

4. Verfahren zum Reinigen und Desinfizieren einer kontaminierten durchlässigen Linse (15) mit gegenüberliegenden großen Flächen (16, 18), umfassend die folgenden Schritte: Positionieren der Linse in einer Aufnahme, indem separate, aus einem biegsamen, fluidabsorptionsfähigen Material gebildeten Übertragungsmedium-Elemente (50, 51) in Kontakt mit individuellen gegenüberliegenden Elektroden (40) gebracht werden, und indem die durchlässige Linse (15) zwischen jeweiligen Kontaktierungsflächen der Übertragungsmedium-Elemente (50, 51) ausgerichtet wird; Benetzen der genannten Übertragungsmedium-Elemente (50, 51) mit einer elektrisch leitenden Lösung; und Erzeugen eines elektrischen Stroms zwischen den genannten Elektroden (40), durch die genannten benetzten Übertragungsmedium-Elemente (50, 51) und die genannte Linse (15), die auf den genannten Linsenkontaktierungsflächen (50b, 51b) der genannten Übertragungsmedium-Elemente ausgerichtet ist, wobei die genannten Linsenkontaktierungsflächen (50b, 51b) so dimensioniert und angeordnet sind, daß im wesentlichen die gesamte Übertragung des elektrischen Stroms zwischen den genannten Elektroden durch die Linse stattfindet, so daß Schmutzstoffe der genannten Linse (15) unter dem Einfluß eines elektrischen Feldes in der Linse aus dem Gehäuse heraus bzw. von der Oberfläche der genannten Linse (15) und auf die genannten Übertragungsmedium-Elemente (50, 51) wandern.

## Revendications

1. Appareil (10) pour nettoyer une lentille de contact (15) dans lequel l'appareil comporte un récipient dans lequel la lentille est placée entre deux électrodes (40) connectables à une source de courant continu et avec un milieu de transmission de courant couplant les électrodes (40) à la lentille de telle sorte qu'un champ électrique est établi à travers la lentille pour nettoyer la lentille électrocinétiquement, ledit appareil étant caractérisé en ce que ledit milieu de transmission de courant est constitué par au moins un élément de milieux de transmission (50) composé d'une matière absorbante de fluide pliante comprise à l'intérieur dudit récipient, ledit élément de milieux de transmission (50) comportant une surface de contact avec la lentille (50b) pour contacter une surface principale (16) de la lentille de contact (15), et ladite surface de contact étant dimensionnée et disposée de telle sorte que lorsqu'elle est mouillée avec un fluide électriquement conducteur (36) elle coopère avec les électrodes (40) pour établir ledit champ électrique à travers la lentille (15) quand elle est alignée en contact avec ledit élément de milieux de transmission (50), de telle sorte que sensiblement toute la transmission du courant électrique entre lesdites électrodes est confinée pour se produire à travers la lentille.

2. Appareil tel que revendiqué à la revendication 1, qui comprend une paire desdits éléments de milieux de transmission (50,51) comprenant chacun une matière absorbante de fluide pliante et comportant une dite surface de contact avec la lentille respective (50b,51b), la surface de contact avec la lentille (50b) d'un (50) desdits éléments de milieux de transmission étant adaptée pour contacter une surface principale (16) de la lentille (15), et la surface de contact avec la lentille (51b) de l'autre (51) desdits éléments de milieux de transmission étant adaptée pour contacter l'autre surface principale (18) de ladite lentille (15), et lesdits éléments de milieux de transmission (50,51) quand ils sont mouillés avec ledit fluide électriquement conducteur (36) coopérant avec les électrodes (40) pour établir ledit champ électrique à travers la lentille (15) quand elle est alignée entre et contactée par lesdits éléments de milieux de transmission mouillés (50,51).

3. Appareil tel que revendiqué à la revendication 1, comprenant une paire desdits éléments de milieux de transmission (50,51) disposés entre lesdites électrodes (40) et espacés pour recevoir la lentille (15) entre eux, chacun desdits éléments de milieux de transmission (50,51) comportant une dite surface de contact avec la lentille respective (50b,51b) pour contacter une surface respective des surfaces principales (16,18) de la lentille (15), chacun desdits éléments de milieux de transmission (50,51) étant formé d'une matière absorbante de fluide pliante de telle sorte que, lorsqu'ils sont mouillés avec ledit fluide électriquement conducteur, lesdits éléments de milieux (50,51) sont capables d'acheminer un courant électrique; et lesdits éléments de milieux de transmission (50,51) et lesdites électrodes (40) coopérant quand une lentille perméable (15) est positionnée entre et en contact avec lesdits éléments de milieux de transmission (50,51) et ces derniers sont mouillés avec ledit fluide électriquement conducteur, de telle sorte que ledit champ électrique est établi à travers ladite lentille perméable (15) si bien que les contaminants sur et à l'intérieur de ladite lentille sont extraits de ladite lentille et déposés sur lesdits éléments de milieux de transmission (50,51) sous l'influence dudit courant.

4. Méthode pour nettoyer et désinfecter une lentille perméable contaminée (15) ayant des surfaces principales opposées (16,18), comportant les étapes de positionnement de la lentille dans un récipient en amenant des éléments de milieux de transmission séparés (50,51) formés en une matière absorbante de fluide pliante en contact avec des électrodes opposées individuelles (40) et en alignant la lentille perméable (15) entre des surfaces de contact respectives des éléments de milieux de transmission (50,51); mouillage desdits éléments de milieux de transmission (50,51) avec une solution électriquement conductrice; et établissement d'un courant électrique entre lesdites électrodes (40), à travers lesdits éléments de milieux de transmission mouillés (50,51) et ladite lentille (15) alignée sur lesdites surfaces de contact avec la lentille (50b,51b) desdits éléments de milieux de transmission, lesdites surfaces de contact avec la lentille (50b,51b) étant dimensionnées et disposées de telle sorte que sensiblement toute la transmission du courant électrique entre lesdites électrodes est confinée pour se dérouler à travers la lentille si bien que les contaminants de ladite lentille (15) migrent sous l'influence d'un champ électrique dans la lentille depuis l'intérieur du corps, ou la surface, de ladite lentille (15) et se déposent sur lesdits éléments de milieux de transmission (50,51).
